# EUROPEAN PATENT APPLICATION

(11) **EP 4 420 794 A1**
(43) Date of publication of application: **28.08.2024**
(21) Application number: 22944329.6
(22) Date of filing: 02.06.2022
(51) Int. Cl.: B05C 5/02, B05C 11/10, H01M 4/04

(54) **EXTRUSION COATING APPARATUS AND BATTERY PRODUCTION SYSTEM**

(71) Applicant: Contemporary Amperex Technology Co., Limited, Ningde, Fujian 352100 (CN)
(72) Inventor: WENG, Zhirong, Ningde, Fujian 352100 (CN); JIANG, Liang, Ningde, Fujian 352100 (CN); WANG, Yalong, Ningde, Fujian 352100 (CN); ZHANG, Shengwu, Ningde, Fujian 352100 (CN)
(74) Representative: Jacob, Reuben Ellis
(86) International application number: PCT/CN2022/096895
(87) International publication number: WO 2023/231000

(57) **Abstract**

Embodiments of the present application provide an extrusion coating apparatus and a battery production system. The extrusion coating apparatus comprises: a first die and a second die that are snap-connected to each other; a flow channel formed between the first die and the second die, the flow channel comprising a material inlet and a material outlet; and a gasket, which is provided between the first die and the second die, and disposed at both sides of the flow channel along a direction from the material inlet to the material outlet. In a production process, the specifications of the gasket can be adjusted according to speed distribution changes at the material outlet, thus adjusting the dimensions of the flow channel and changing the flow channel, and controlling extrusion speed distribution, so as to be used for slurries of different viscosities, and meet consistency requirements for slurry extrusion speed.

## Description

### FIELD

The present disclosure relates to the field of battery production and manufacturing, and in particular, to an extrusion coating apparatus and a battery production system.

### BACKGROUND

In some related arts, an extrusion coating device required for lithium battery coating includes a feeding inlet and a coating outlet. The feeding inlet is generally small, but a wide coating width is needed for production. Thus, a coating width of the coating outlet is several times or even dozens of times a size of the feeding inlet. Therefore, there is a problem that an extrusion speed is unstable and a fluctuation range is large since different viscosities and flow resistances of a slurry.

### SUMMARY

Some embodiments of the present disclosure provide an extrusion coating apparatus and a battery production system for alleviating the problem of an unstable slurry extrusion speed.

One aspect of the present disclosure provides an extrusion coating apparatus, including: a first die head, a second die head, a flow channel and at least one gasket. The first die head and the second die head are connected to each other in a snap-fit manner. The flow channel is formed between the first die head and the second die head, and the flow channel includes a feeding inlet and a discharging outlet. The at least one gasket disposed between the first die head and the second die head. The at least one gasket is disposed at two sides of the flow channel in a direction from the feeding inlet to the discharging outlet.

The at least one gasket is disposed between the first die head and the second die head. The at least one gasket is disposed at the two sides of the flow channel in the direction from the feeding inlet to the discharging outlet. During production, sizes of the gasket may be adjusted based on a change in speed distribution at the discharging outlet, thereby adjusting sizes of the flow channel. By adjusting the flow channel, extrusion speed distribution is further regulated to suit slurries with different viscosities. Therefore, the requirement for consistency in the slurry extrusion speed is satisfied.

In some embodiments, the at least one gasket includes at least two layers of gaskets laminated in a direction from the first die head to the second die head.

The at least two layers of gaskets are laminated for use. Therefore, different combining forms of the at least two layers of gaskets may adjust the flow channel with different precisions, which expands an adjustment range of the flow channel and satisfies a wider range of fluctuations in slurry flow characteristics.

In some embodiments, the at least one gasket has a thickness that is equal or gradually varying in the direction from the feeding inlet to the discharging outlet.

Depending on different slurry flow characteristics, the at least one gasket may have the thickness that is equal, or thicknesses at its various portions may be adjusted as needed, to precisely adjust the flow channel, thereby realizing adjustment on the corresponding flow channel for suiting a slurry with a specific characteristic. Furthermore, the extrusion speed distribution is further regulated to satisfy the requirement for consistency in the slurry extrusion speed.

In some embodiments, a thickness of a portion of the at least one gasket close to the feeding inlet is greater than a thickness of a portion of the at least one gasket close to the discharging outlet; or the thickness of the portion of the at least one gasket close to the feeding inlet is smaller than the thickness of the portion of the at least one gasket close to the discharging outlet.

The thickness of the gasket may be flexibly adjusted to realize the corresponding adjustment on the flow channel for suiting the slurry with specific characteristics. Furthermore, the extrusion speed distribution is further regulated to satisfy the requirement for consistency in the slurry extrusion speed.

In some embodiments, a thickness of the at least one gasket gradually decreases or gradually increases in the direction from the feeding inlet to the discharging outlet.

The gasket is wedge-shaped and a placement direction of the gasket can be adjusted freely. In this way, the applicable flow channel may be correspondingly adjusted for the slurry with specific characteristics. Furthermore, it is possible to regulate the extrusion speed distribution and satisfy the requirement for consistency in the slurry extrusion speed.

In some embodiments, a width of the feeding inlet is smaller than a width of the discharging outlet.

The width of the feeding inlet is smaller than the width of the discharging outlet, which not only benefits a connection between the feeding inlet and a slurry providing component, but also satisfy a coating width of the discharging outlet.

In some embodiments, the flow channel includes an intermediate flow channel located between the feeding inlet and the discharging outlet. A width of the intermediate flow channel gradually increases in the direction from the feeding inlet to the discharging outlet.

The width of the intermediate flow channel gradually increases in the direction from the feeding inlet to the discharging outlet, which is beneficial for gradually and evenly guiding a slurry entering from a narrower feeding inlet towards the discharging outlet and satisfies the coating width of the discharging outlet, avoiding the problems such as an unstable flow speed, cracking and blistering of a coating, and the like, which may cause the subsequent process to fail.

In some embodiments, the intermediate flow channel has flow channel walls located at two sides of the intermediate flow channel in a width direction of the flow channel. The flow channel wall is linear or arc-shaped; or the flow channel wall includes a linear section and an arc-shaped section.

A specific molded line of the flow channel wall of the intermediate flow channel may be adjusted based on a type of the slurry to ensure the consistency of the slurry flow speed.

In some embodiments, the flow channel includes an intermediate flow channel located between the feeding inlet and the discharging outlet. The intermediate flow channel includes a first flow channel section and a second flow channel section. The first flow channel section is connected to the feeding inlet. The second flow channel section is connected to the first flow channel section and the discharging outlet. In the direction from the feeding inlet to the discharging outlet, a width of the first flow channel section gradually increases, and a width of the second flow channel section is equal to a width of the discharging outlet.

The width of the first flow channel section gradually increases in the direction from the feeding inlet to the discharging outlet, which facilitates the gradual and even guiding of the slurry entering from the narrower feeding inlet towards the discharging outlet. Since the width of the second flow channel section is equal to the width of the discharging outlet, the slurry passes through the second flow channel section having the width equal to that of the discharging outlet before reaching the discharging outlet, which avoids the problem of unstable slurry flow speed and is beneficial to satisfy the coating width suitable for the discharging outlet. In addition, uniformity consistency of the extrusion speed may be ensured.

In some embodiments, in a discharge direction of the flow channel, the discharging outlet has a same width.

The discharging outlet of the flow channel is configured as a flow channel section having a cross section with a same width and a predetermined length, which increases a flow resistance at the outlet and enhances uniformity of an outlet speed.

In some embodiments, a height of the feeding inlet is greater than a height of the discharging outlet.

The feeding inlet has a greater height, which facilitates an entry of the slurry into the flow channel. The discharging outlet has a smaller height, enabling the slurry to be extruded into a coating satisfying the width requirement, improving consistency of the slurry flow speed, and ensuring thickness and width of the coating uniform and stable.

In some embodiments, the flow channel includes an intermediate flow channel located between the feeding inlet and the discharging outlet. A height of the intermediate flow channel is greater than the height of the discharging outlet and is smaller than the height of the feeding inlet.

The height of the feeding inlet is greater than the height of the discharging outlet. The height of the intermediate flow channel is greater than the height of the discharging outlet and is smaller than the height of the feeding inlet. That is, the intermediate flow channel is used for connecting the feeding inlet and the discharging outlet in a transition manner, improving the consistency of the slurry flow speed.

In some embodiments, the height of the intermediate flow channel gradually decreases in the direction from the feeding inlet to the discharging outlet.

The height of the intermediate flow channel gradually decreases in the direction from the feeding inlet to the discharging outlet, which is not only beneficial to flow of the slurry, but also advantageous for gradual laminating of the slurry, being convenient to satisfy the coating width.

In some embodiments, the intermediate flow channel includes a first flow channel section and a second flow channel section. The first flow channel section is connected to the feeding inlet. The second flow channel section is connected to the first flow channel section and the discharging outlet. In the direction from the feeding inlet to the discharging outlet, the first flow channel section has a same height, and a height of the second flow channel section gradually decreases.

The adjusted intermediate flow channel is dividing one region into two regions (the first flow channel section and the second flow channel section). Moreover, the height of the discharging outlet is even smaller than the height of the second flow channel section. Therefore, the height and the thickness of the outlet is independently adjusted according to production requirements, providing more diverse adjustment methods and a wider range of applications.

In some embodiments, the flow channel further includes an intermediate flow channel located between the feeding inlet and the discharging outlet. The second die head includes a first module and a second module. The feeding inlet and the intermediate flow channel are formed in the first module. The discharging outlet is formed in the second module. The at least one gasket includes a first gasket located between the first module and the first die head and located at a side portion of the feeding inlet and the intermediate flow channel.

The second die head is divided into the first module and the second module. The at least one gasket is divided into the first gasket. The first gasket is located between the first module and the first die head, which may perform an upward and downward adjustment on the height of the feeding inlet and the height of the intermediate flow channel independently, and satisfy the flow channel characteristics of different slurries.

In some embodiments, the at least one gasket further includes a second gasket located between the second module and the first die head and located on a side portion of the discharging outlet.

The second die head is divided into the first module and the second module. The at least one gasket is divided into the second gasket. The second gasket is located between the second module and the first die head and performs an upward and downward adjustment on the height of the discharging outlet independently, which is beneficial for achieving a uniform extrusion thickness of the slurry.

In some embodiments, the feeding inlet is disposed at a first end of the first die head and a first end of the second die head. The discharging outlet is disposed at a second end of the first die head opposite to the first end of the first die head and a second end of the second die head opposite to the first end of the second die head.

The feeding inlet is disposed at the first end of the first die head and the first end of the second die head. The discharging outlet is disposed at the second end of the first die head opposite to the first end of the first die head and the second end of the second die head opposite to the first end of the second die head. In this way, it is beneficial for the flow of the slurry, and is beneficial to ensuring the consistency in extrusion speed.

In some embodiments, an inner wall surface of the flow channel is a polished surface.

The inner wall surface of the flow channel is polished to be similar to a mirror surface, thereby ensuring that the slurry fully slides in the flow channel and the inner wall surface. Therefore, it is possible to reduce adhesion between the inner wall surface and the slurry and increase a sliding speed of the slurry on the inner wall surface. In addition, consistency of the outlet speed is conducive to be improved.

In some embodiments, the extrusion coating apparatus further includes a connection mechanism fixedly connecting the first die head and the second die head with the at least one gasket.

The first die head and the second die head are fixedly connected with the at least one gasket by arranging the connection mechanism.

Another aspect of the present disclosure provides a battery production system, including the extrusion coating apparatus according to the above embodiments.

The battery production system includes the above-mentioned extrusion coating apparatus and correspondingly has the beneficial effects of the extrusion coating apparatus.

Based on the above embodiments, the present disclosure has the following beneficial effects.

In some embodiments, the at least one gasket is disposed between the first die head and the second die head. The at least one gasket is disposed at the two sides of the flow channel in the direction from the feeding inlet to the discharging outlet. During production, the sizes of the gasket may be adjusted based on the change in the speed distribution at the discharging outlet, thereby adjusting the size of the flow channel. By adjusting the flow channel, the extrusion speed distribution is further regulated to accommodate the slurries with different viscosities. Therefore, the requirement for consistency in the slurry extrusion speed is satisfied.

### BRIEF DESCRIPTION OF THE DRAWINGS

In order to more clearly illustrate the technical solutions of embodiments of the present disclosure, the drawings which are required to be used in the embodiments of the present disclosure will be briefly described below. It is apparent that the drawings described below are some embodiments of the present disclosure, and those of ordinary skill in the art may be obtain other drawings based on the accompanying drawings without inventive effort.
FIG. 1 is a schematic structural diagram of an extrusion coating apparatus according to some embodiments of the present disclosure.
FIG. 2 is a schematic cross-sectional view of an extrusion coating apparatus according to a first embodiment of the present disclosure.
FIG. 3 is an enlarged schematic diagram of a partial structure A in FIG. 2.
FIG. 4 is a schematic top view of a first die head and a gasket according to some embodiments of the present disclosure.
FIG. 5 is a schematic diagram of the gasket illustrated in FIG. 4.
FIG. 6 is a schematic cross-sectional view of an extrusion coating apparatus according to a second embodiment of the present disclosure.
FIG. 7 is a schematic cross-sectional view of an extrusion coating apparatus according to a third embodiment of the present disclosure.
FIG. 8 is a schematic diagram of a connection between a first module and a second module illustrated in FIG. 7.
FIG. 9 is a schematic diagram of a gasket that may be used in a third embodiment of an extrusion coating apparatus according to some embodiments of the present disclosure.
FIG. 10 is a schematic diagram of a flow channel disposed on a first die head according to some embodiments of the present disclosure.
FIG. 11 is a schematic diagram of a flow channel disposed on a first die head according to other embodiments of the present disclosure.

In the accompanying drawings, these accompanying drawings are not necessarily drawn to scale.

### Reference numerals:

1-first die head; 2-second die head; 21-first module; 22-second module; 3-flow channel; 31-feeding inlet; 32-discharging outlet; 33-intermediate flow channel; 331-first flow channel section; 332-second flow channel section; 333-flow channel wall; 4-gasket; 41-first gasket; 42-second gasket; 5-bolt.

### DETAILED DESCRIPTION

Implementations of the present disclosure are described in further detail below with reference to the accompanying drawings and embodiments. The following detailed description of the embodiments and the accompanying drawings are provided to illustrate the principles of the present disclosure and are not intended to limit the scope of the present disclosure, i.e., the present disclosure is not limited to the embodiments described.

In the description of the present disclosure, it should be noted that, unless otherwise specified, "a plurality of' means two or more; orientations or position relationships indicted by terms such as "upper", "lower", "left", "right", "in", "out", and the like, is only for the convenience of describing the present disclosure and simplifying the description, rather than indicating or implying that the associated device or element must have a specific orientation, or be constructed and operated in a specific orientation, and therefore cannot be understood as a limitation to the present disclosure. Furthermore, the terms "first", "second", "third", and the like are used for descriptive purposes only and are not to be construed as indicating or implying relative importance. "Vertical" is not vertical in the strict sense, but within the tolerance. "Parallel" is not parallel in the strict sense, but within the tolerance.

The orientation words appearing in the following description are directions shown in the drawings and do not limit the specific structure of the present disclosure. In the description of the present disclosure, it should also be noted that, unless expressly specified and limited otherwise, the terms "mounted", "linked", and "connected" are to be interpreted broadly, e.g., either fixedly or detachably, or integrally connected; may be directly linked or indirectly linked through an intermediary. For those of ordinary skill in the art, the specific meaning of the above-mentioned terms in the present disclosure can be understood according to specific circumstances.

At present, applications of a power battery are becoming increasingly widespread based on market trends. The power battery is not only applied in energy storage power systems such as hydro, thermal, wind, and solar power plants, but also widely applied in electric bicycles, electric motorcycles, electric cars, and other electric vehicles, and various fields including military equipment and aerospace. With continuous expansion in the field of power battery applications, their market demand is also growing rapidly.

A power battery generally includes a battery cell including an electrode plate and a separator. The electrode plate includes an anode electrode plate and a cathode electrode plate. The anode electrode plate and the cathode electrode plate each include a current collector and a coating layer. The active material of anode electrode plate is coated on the current collector of the anode electrode plate to form the coating layer, and the active material of cathode electrode plate active material is coated on the current collector of the cathode electrode plate to form the coating layer. The separator is an insulator disposed between the anode electrode plate and the cathode electrode plate, and is configured to separate the coating layer of the anode electrode plate from the coating layer of the cathode electrode plate. The anode electrode plate, the separator, and the cathode electrode plate are sequentially laminated and wound to form the battery cell.

In a process of preparing the electrode plate, the slurry can be extruded and coated on the current collector of the electrode plate by using an extrusion coating apparatus to form the coating layer. The extrusion coating apparatus generally includes a feeding inlet and a coating outlet.

The inventor finds that feeding inlet is generally small, but a wide coating width is needed for coating. Thus, a coating width of a coating outlet is several times or even dozens of times that of the feeding inlet. Therefore, in an extrusion flowing process of a slurry from the feeding inlet to the coating outlet, a problem of an unstable slurry extrusion speed and a wide range of fluctuations caused by different viscosities and flow resistances of the slurry occurs.

Based on this, according to the embodiments of the present disclosure, an extrusion coating apparatus and a battery production system are provided for alleviating the problem of unstable slurry extrusion speed.

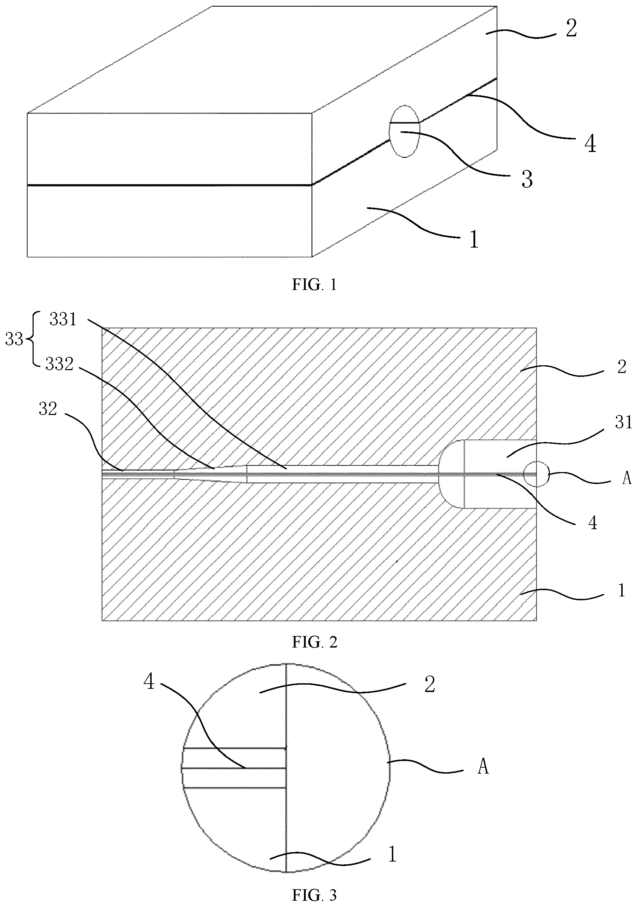

Referring to FIG. 1, in some embodiments, the extrusion coating apparatus includes a first die head 1, a second die head 2, a flow channel 3, and at least one gasket 4. The first die head 1 and the second die head 2 are connected to each other in a snap-fit manner.

Referring to FIG. 2 and FIG. 3, a flow channel 3 is formed between the first die head 1 and the second die head 2. The flow channel 3 includes a feeding inlet 31 and a discharging outlet 32. At least one gasket 4 is disposed between the first die head 1 and the second die head 2. The at least one gasket 4 is disposed at two sides of the flow channel 3 in a direction from the feeding inlet 31 to the discharging outlet 32.

In this embodiment, the at least one gasket 4 is disposed between the first die head 1 and the second die head 2. The at least one gasket 4 is disposed at the two sides of the flow channel 3 in the direction from the feeding inlet 31 to the discharging outlet 32. During production, sizes of the gasket 4 may be adjusted based on a change in speed distribution at the discharging outlet 32, thereby adjusting the sizes of the flow channel 3. By adjusting the flow channel, extrusion speed distribution is further regulated to suit slurries with different viscosities. Therefore, the requirement for consistency in the slurry extrusion speed is satisfied.

In some embodiments, an adjustment precision of the flow channel 3 depends on a thickness of the gasket 4. It is available to manufacture gaskets in different sizes in advance based on actual production precision requirements. Furthermore, the gaskets in different sizes are adjusted and used based on complex changes in slurry characteristic and yield fluctuation changes in production field. Therefore, there are diversified adjustment manners. Moreover, the extrusion coating apparatus according to the embodiments of the present disclosure is simple in structure and convenient to use, and may cope with various slurry sizes in production field.

In the embodiments of the present disclosure, a direction of the flow channel 3 from the feeding inlet 31 to the discharging outlet 32 is a length direction of the flow channel 3, a direction from the first die head 1 to the second die head 2 is a height direction of the flow channel 3, and a direction perpendicular to the length direction and the height direction of the flow channel 3 is a width direction of the flow channel 3. A discharging direction of the flow channel 3 is basically consistent with the length direction of the flow channel 3. The discharging outlet 32 is the coating outlet.

In some embodiments, the first die head 1 is provided with a groove extending in the length direction. The flow channel 3 is formed by hermetically connecting the groove on the first die head 1 with the second die head 2.

In other embodiments, the second die head 2 is provided with a groove extending in the length direction. The flow channel 3 is formed by hermetically connecting the groove on the second die head 2 with the first die head 1.

In yet other embodiments, the first die head 1 and the second die head 2 both are provided with the grooves extending in the length direction. The flow channel 3 is formed by hermetically connecting the groove on the first die head 1 with the groove on the second die head 2.

In some embodiments, the groove on the first die head 1 and the groove on the second die head 2 may be symmetrically arranged and have a same shape.

In some embodiments, the first die head 1 and the second die head 2 may have a same shape or different shapes.

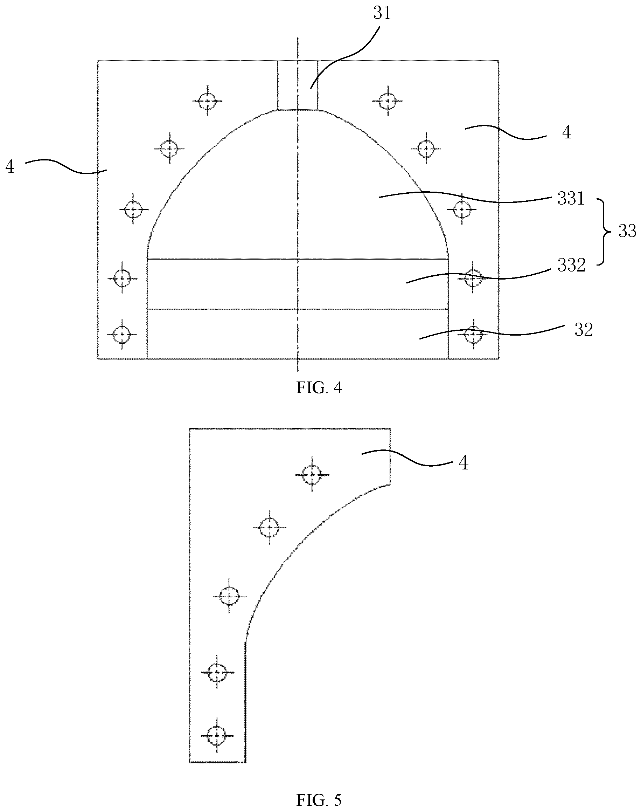

Referring to FIG. 4 and FIG. 5, in some embodiments, one gasket 4 is disposed at each of two sides of the flow channel 3 in the length direction. The feeding inlet 31 is formed between first ends of the two gaskets 4, and the discharging outlet 32 is formed between second ends of the two gaskets 4.

In some embodiments, a molded line at a side of the gasket 4 close to the flow channel 3 is consistent with a molded line of a flow channel wall of the flow channel 3 in the width direction.

In some embodiments, the at least one gasket 4 includes one layer of gaskets 4 disposed or at least two layers of gaskets 4 laminated in the direction from the first die head 1 to the second die head 2.

Since the adjustment precision of the flow channel 3 depends on the thickness of the gasket 4, the gaskets 4 in different sizes may be manufactured in advance based on actual production precision requirements. During use, the one layer of gaskets 4 may be used, or the at least two layers of gaskets 4 are laminated for use. Therefore, different combining forms of the at least one gasket 4 may adjust the flow channel 3 with different precisions, which expands an adjustment range of the flow channel 3 and achieve considerable adjustment of the flow channel 3. In addition, it is possible to satisfy a broader range of fluctuations in slurry flow characteristics.

In some embodiments, the thickness of the gasket 4 is greater than or equal to 0.1mm.

In a coating process with a high solid content, due to that the slurry has a greater viscosity and poorer fluidity, the size of flow channel 3 is an even more critical factor in extrusion speed consistency. However, a slurry with high solid content has an unstable flow characteristic and a great fluctuation range. Therefore, the requirement for extrusion speed consistency in production may not be satisfied only by using a flow channel in a single size.

Therefore, the size of the of the flow channel 3 may be adjusted in a wide range by adopting the extrusion coating apparatus according to the embodiments of the present disclosure. Moreover, during production, real-time adjustment may be performed based on the different slurry flow characteristics to achieve the consistency of the extrusion speed, which is suitable for a high-solid-content extrusion coating process.

Here, the high-solid-content extrusion coating process includes a dry material coating process.

In some embodiments, the gasket 4 has an equal thickness or different thicknesses at each portion. Alternatively, some portions of the gasket 4 has a same thickness, and some have different thicknesses.

In some embodiments, the at least one gasket 4 has a thickness that is gradually varying in the direction from the feeding inlet 31 to the discharging outlet 32.

Depending on different slurry flow characteristics, the at least one gasket may have the thickness that is equal, or thicknesses at its various portions that may be adjusted as needed, to precisely adjust the flow channel 3, thereby realizing corresponding adjustment on the flow channel 3 for suiting a slurry with a specific characteristic. Furthermore, the extrusion speed distribution is further regulated to satisfy the requirement for consistency in the slurry extrusion speed.

Referring to FIG. 4 and FIG. 5, in some embodiments, a thickness of a portion of the at least one gasket 4 close to the feeding inlet 31 is greater than a thickness of a portion of the at least one gasket 4 close to the discharging outlet 32.

The thickness of the portion of the at least one gasket 4 close to the feeding inlet 31 is greater, which enables the slurry to enter the flow channel 3 more quickly and sufficiently, and ensures consistency in the slurry extrusion speed in the flow channel 3.

In other embodiments, the thickness of the portion of the at least one gasket 4 close to the feeding inlet 31 is smaller than the thickness of the portion of the at least one gasket 4 close to the discharging outlet 32.

The thickness of the gasket 4 may be flexibly adjusted to realize the corresponding adjustment on the flow channel 3 for suiting the slurry with specific characteristics. Furthermore, the extrusion speed distribution is further regulated to satisfy the requirement for consistency in the slurry extrusion speed.

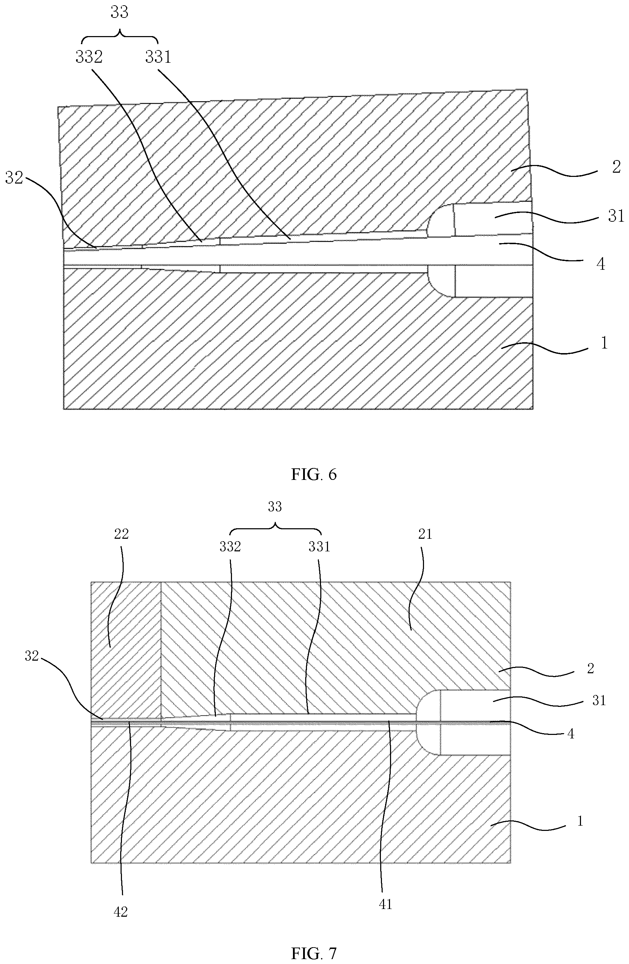

Referring to FIG. 6, in some embodiments, a thickness of the at least one gasket 4 gradually decreases in the direction from the feeding inlet 31 to the discharging outlet 32.

The gasket 4 is wedge-shaped. Therefore, the height of the flow channel 3 gradually decreases in the direction from the feeding inlet 31 to the discharging outlet 32, which is beneficial to the flow of the slurry and enables the slurry to be uniformly extruded and coated.

In other embodiments, the thickness of the at least one gasket 4 gradually increases in the direction from the feeding inlet 31 to the discharging outlet 32.

In the embodiment illustrated in FIG. 6, the gasket 4 is wedge-shaped and has a placement direction that is freely adjustable. In this way, the applicable flow channel 3 may be correspondingly adjusted for the slurry with specific characteristics. Furthermore, it is possible to regulate the extrusion speed distribution and satisfy the requirement for consistency in the slurry extrusion speed.

In the above embodiments, the wedge-shaped gasket 4 has an angle of inclination greater than 0°, and smaller than or equal to 20°.

The gasket 4 includes a common parallel-plate gasket and a wedge-shaped gasket. The common parallel-plate gasket achieves an adjustment of an overall height of the flow channel, and the wedge-shaped gasket achieves an inclined adjustment.

The number of common parallel-plate gaskets and the number of wedge-shaped gaskets are adjusted to achieve overall change and inclination of the height of the flow channel. The number and thickness of the gaskets 4 are determined according to production requirements. A minimum thickness of the gaskets 4 determines an adjustment precision of flow channel. A sum of thicknesses of the gaskets that may be laminated together determines a maximum adjustment range of the flow channel.

In some embodiments, a width of the feeding inlet 31 is smaller than a width of the discharging outlet 32.

The feeding inlet 31 is configured to be in communication with a slurry providing component and convey the slurry into the flow channel 3. The discharging outlet 32 is used for coating slurry. The width of the discharging outlet 32 needs to satisfy the coating width requirements of the electrode plate. The width of the feeding inlet 31 is smaller than the width of the discharging outlet 32, which not only benefits a connection between the feeding inlet 31 and a slurry providing component, but also satisfy a coating width of the discharging outlet 32.

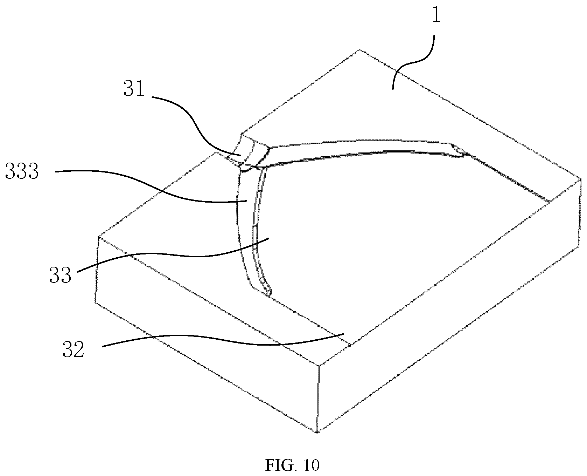

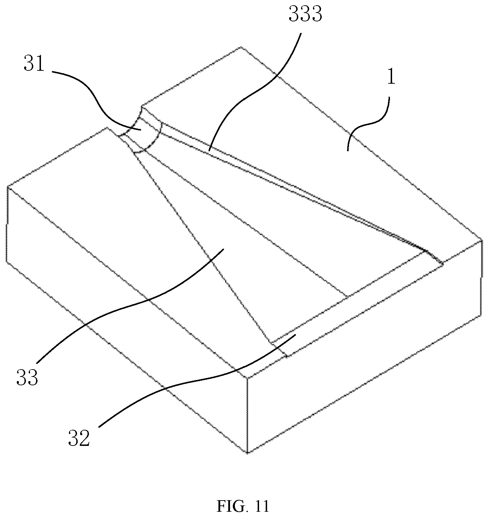

Referring to FIG. 10 and FIG. 11, in some embodiments, the flow channel 3 includes an intermediate flow channel 33 located between the feeding inlet 31 and the discharging outlet 32. A width of the intermediate flow channel 33 gradually increases in the direction from the feeding inlet 31 to the discharging outlet 32.

The flow channel 3 between the first die head 1 and the second die head 2 is reasonably designed, so that the slurry may be uniformly shunted due to different flow resistance. Moreover, the extrusion speed is ensured to be equal.

The width of the intermediate flow channel 33 gradually increases in the direction from the feeding inlet 31 to the discharging outlet 32, which is beneficial for gradually and evenly guiding a slurry entering from a narrower feeding inlet 31 towards the discharging outlet 32 and satisfying the coating width of the discharging outlet 32, avoiding the problems such as an unstable flow speed, cracking and blistering of a coating, and the like, which may cause the subsequent process not to fail.

Referring to FIG. 10, in some embodiments, the intermediate flow channel 33 has flow channel walls 333 located at two sides of the intermediate flow channel 33 in a width direction of the flow channel 3, and the flow channel wall 333 is arc-shaped.

Referring to FIG. 11, in other embodiments, the intermediate flow channel 33 has flow channel walls 333 located at two sides of the intermediate flow channel 33 in a width direction of the flow channel 3, and the flow channel wall 333 is linear.

Referring to FIG. 4, in yet other embodiments, the intermediate flow channel 33 has flow channel walls 333 located at two sides of the intermediate flow channel 33 in a width direction of the flow channel 3. The flow channel wall 333 includes an arc-shaped section and a linear section. That is, the flow channel wall 333 has both the arc-shaped section and the linear section.

The flow channel wall of the intermediate flow channel 33 is linear or arc-shaped; or the flow channel wall of the intermediate flow channel 33 includes the arc-shaped section and the linear section. This represents a plurality of optional embodiments of the intermediate flow channel 33 as long as the width of the intermediate flow channel 33 gradually increases in the direction from the feeding inlet 31 to the discharging outlet 32. A specific molded line of the flow channel wall 333 of the intermediate flow channel 33 may be adjusted based on a specification of the slurry to ensure the consistency of the slurry flow speed.

Referring to FIG. 10, the flow channel wall 333 of the flow channel 3 is similar to a coat hanger type. The flow channel wall 333 of the flow channel 3 is similar to a fishtail type, as illustrated in FIG. 11. The flow channel 3 includes basic channels such as a coat-hanger-type channel and a fishtail-type channel, and the sizes of the basic flow channel may be determined based on a fluctuation range of slurry flow characteristics through hydrodynamic analysis. Through a reasonable arrangement of the basic flow channel, desired outlet consistency may be achieved with minor adjustments when there are fluctuations in slurry properties.

Referring to FIG. 4, in some embodiments, the flow channel 3 includes an intermediate flow channel 33 located between the feeding inlet 31 and the discharging outlet 32. The intermediate flow channel 33 includes a first flow channel section 331 and a second flow channel section 332. The first flow channel section 331 is connected to the feeding inlet 31. The second flow channel section 332 is connected to the first flow channel section 331 and the discharging outlet 32. In the direction from the feeding inlet 31 to the discharging outlet 32, a width of the first flow channel section 331 gradually increases, and a width of the second flow channel section 332 is equal to a width of the discharging outlet 32.

The width of the first flow channel section 331 gradually increases in the direction from the feeding inlet 31 to the discharging outlet 32, which facilitates the gradual and even guiding of the slurry entering from the narrower feeding inlet 31 towards the discharging outlet 32. The width of the second flow channel section 332 is equal to the width of the discharging outlet 32. Moreover, the slurry passes through the second flow channel section 332 having the width equal to that of the discharging outlet 32 before reaching the discharging outlet 32, which avoids the problem of unstable slurry flow speed and is beneficial to satisfy the coating width suitable for the discharging outlet 32. In addition, uniformity consistency of the extrusion speed may be ensured.

In some embodiments, a width of a portion of the first flow channel section 331 connected to the feeding inlet 31 is equal to the width of the feeding inlet 31. In the direction from the feeding inlet 31 to the discharging outlet 32, the width of the first flow channel section 331 gradually increases, a width of a portion of the first flow channel section 331 connected to the second flow channel section 332 is equal to the width of the second flow channel section 332, and the width of the second flow channel section 332 is equal to the width of the discharging outlet 32.

Referring to FIG. 4, since the at least one gasket 4 is disposed at the two sides of the flow channel 3 in the length direction of the flow channel 3. The feeding inlet 31 is formed between the first ends of the two gaskets 4, and the discharging outlet 32 is formed between the second ends of the two gaskets 4. A side of the gasket 4 close to the flow channel 3 has a molded line consistent with that of the flow channel wall 333 of the flow channel 3.

Therefore, the molded line of the side of the gasket 4 close to the flow channel 3 may be a combination of an arc-shaped section and a linear section as illustrated in FIG. 5, and the two gaskets 4 as illustrated in FIG. 5 may fit with the flow channel 3 similar to the coat hanger type.

Referring to FIG. 10 and FIG. 11, in some embodiments, in a discharge direction of the flow channel 3, the discharging outlet 32 has a same width.

The discharging outlet 32 of the flow channel 3 is configured as a flow channel section having a cross section with a same width and a predetermined length, which increases a flow resistance at the outlet and enhances uniformity of an outlet speed.

Referring to FIG. 2, FIG. 6, and FIG. 7, in some embodiments, a height of the feeding inlet 31 is greater than a height of the discharging outlet 32.

The feeding inlet 31 has a greater height, which facilitates an entry of the slurry into the flow channel 3. The discharging outlet 32 has a smaller height, enabling the slurry to be extruded into a coating satisfying the width requirement, improving consistency of the slurry flow speed, and ensuring thickness and width of the coating uniform and stable.

Referring to FIG. 2, FIG. 6, and FIG. 7, in some embodiments, the flow channel 3 includes an intermediate flow channel 33 located between the feeding inlet 31 and the discharging outlet 32. A height of the intermediate flow channel 33 is greater than the height of the discharging outlet 32 and is smaller than the height of the feeding inlet 31.

The height of the feeding inlet 31 is greater than the height of the discharging outlet 32. The height of the intermediate flow channel 33 is greater than the height of the discharging outlet 32 and is smaller than the height of the feeding inlet 31. Moreover, the intermediate flow channel 33 is used for connecting the feeding inlet 31 and the discharging outlet 32 in a transition manner, improving the consistency of the slurry flow speed.

In some embodiments, the height of the intermediate flow channel 33 gradually decreases in the direction from the feeding inlet 31 to the discharging outlet 32.

The height of the feeding inlet 31 is greater than the height of the discharging outlet 32. The height of the intermediate flow channel 33 gradually decreases in the direction from the feeding inlet 31 to the discharging outlet 32, which is not only beneficial to flow of the slurry, but also advantageous for gradual laminating of the slurry. Therefore, it is easier to achieve a desired coating width.

Referring to FIG. 2, FIG. 6, and FIG. 7, in some embodiments, the intermediate flow channel 33 includes a first flow channel section 331 and a second flow channel section 332. The first flow channel section 331 is connected to the feeding inlet 31. The second flow channel section 332 is connected to the first flow channel section 331 and the discharging outlet 32. In the direction from the feeding inlet 31 to the discharging outlet 32, the first flow channel section 331 has a same height and a height of the second flow channel section 332 gradually decreases.

The height of the first flow channel section 331 is smaller than the height of the feeding inlet 31, so that the slurry may be extruded once. The height of the second flow channel section 332 gradually decreases in the direction from the feeding inlet 31 to the discharging outlet 32, which enables the slurry to be gradually pressurized. Therefore, the slurry satisfies a coating width and a coating thickness of the discharging outlet 32.

An adjustment of the intermediate flow channel 33 is dividing one region into two regions (the first flow channel section 331 and the second flow channel section 332). Furthermore, the height of the discharging outlet 32 is even smaller than the height of the second flow channel section 332. Therefore, a height and thickness of the outlet is independently adjusted according to production requirements, providing more diverse adjustment methods and a wider range of applications.

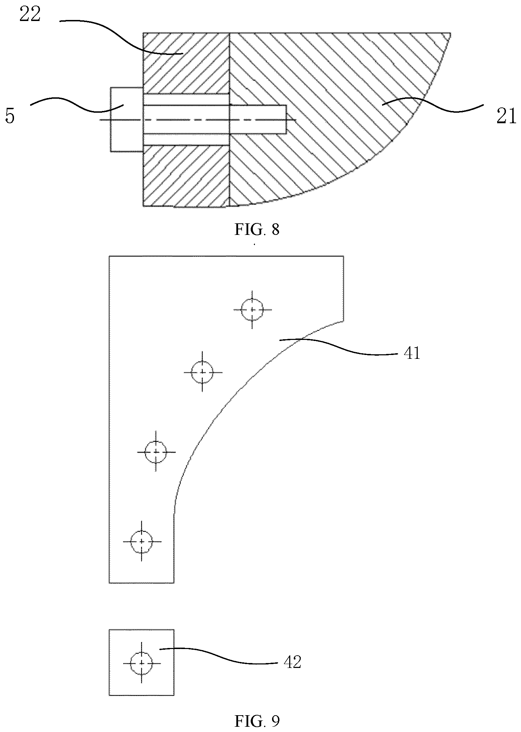

Referring to FIG. 7 and FIG. 8, in some embodiments, the flow channel 3 further includes an intermediate flow channel 33 located between the feeding inlet 31 and the discharging outlet 32. The second die head 1 includes a first module 21 and a second module 22. The feeding inlet 31 and the intermediate flow channel 33 are formed in the first module 21. The discharging outlet 32 is formed in the second module 22. The at least one gasket 4 includes a first gasket 41 located between the first module 21 and the first die head 1 and located at a side portion of the feeding inlet 31 and the intermediate flow channel 33.

The second die head 2 is divided into the first module 21 and the second module 22. The at least one gasket 4 is divided into the first gasket 41. The first gasket 41 is located between the first module 21 and the first die head 1, which may perform an upward and downward adjustment on the height of the feeding inlet 31 and the height of the intermediate flow channel 33 independently, and satisfy the flow channel characteristics of different slurries.

Referring to FIG. 7 and FIG. 9, in some embodiments, the at least one gasket 4 further includes a second gasket 42 located between the second module 22 and the first die head 1 and located on a side portion of the discharging outlet 32.

The second die head 2 is divided into the first module 21 and the second module 22. The at least one gasket 4 is divided into the second gasket 42. The second gasket 42 is located between the second module 22 and the first die head 1 and performs an upward and downward adjustment on the height of the discharging outlet 32 independently, which is beneficial for achieving a uniform extrusion thickness of the slurry.

In some embodiments, the second die head 2 is divided into the first module 21 and the second module 22, and the second module 22 is located at the discharging outlet 32, so that the upward and downward adjustment on the height (thickness) of the discharging outlet 32 may be performed independently. Moreover, the gaskets are divided into the first gasket 41 and the second gasket 42. Therefore, a flow channel adjustment and an outlet thickness adjustment may be independently performed. Since the height (thickness) of the discharging outlet 32 may be adjusted independently, an influence of the adjustment of the flow channel on the thickness of the outlet may be avoided. In addition, it is beneficial to realize that an extrusion thickness of the slurry is constant when the gasket is adjusted. Furthermore, a thickness of the coating satisfies design requirements.

The first die head 2 may also be divided into two modules, which is not limited to the embodiments described, as long as achieving separate adjustment on the height of the discharging outlet 32.

Referring to FIG. 2, FIG. 6, and FIG. 7, in some embodiments, the feeding inlet 31 is disposed at a first end of the first die head 1 and a first end of the second die head 2. The discharging outlet 32 is disposed at a second end of the first die head 1 opposite to the first end of the first die head 1 and a second end of the second die head 2 opposite to the first end of the second die head 2.

In the coating process with the high solid content, the slurry has the greater viscosity and poorer fluidity. Therefore, the feeding inlet 31 is disposed at the first end of the first die head 1 and the first end of the second die head 2. The discharging outlet 32 is disposed at the second end of the first die head 1 opposite to the first end of the first die head 1 and the second end of the second die head 2 opposite to the first end of the second die head 2. In this way, it is beneficial for the flow of the slurry, and is beneficial to ensuring the consistency in extrusion speed. As a result, the extrusion coating apparatus according to the embodiments of the present disclosure is not only suitable for a wet coating process, but also suitable for a dry coating process, and has a wide application range.

In some embodiments, with reference to FIG. 8, the extrusion coating apparatus further includes a connection member. The connection member is connected to the first die head 1 and the second die head 2. In some embodiments, the connection member includes a bolt 5.

In some embodiments, an inner wall surface of the flow channel 3 is a polished surface.

The inner wall surface of the flow channel 3 is polished to be similar to a mirror surface, thereby ensuring that the slurry fully slides in the flow channel and the inner wall surface. Therefore, it is possible to reduce adhesion between the inner wall surface and the slurry and increase a sliding speed of the slurry on the inner wall surface. In addition, consistency of the outlet speed is conducive to be improved.

In some embodiments, the height of the feeding inlet 31 is greater than the height of the discharging outlet 32, and the width of the feeding inlet 31 is smaller than the width of the discharging outlet 32.

In some embodiments, the extrusion coating apparatus further includes a connection mechanism fixedly connecting the first die head 1 and the second die head 2 with the at least one gasket 4.

In some embodiments, the connection mechanism includes a bolt.

The connection mechanism is provided to fixedly connect the first die head 1, the second die head 2, and the gasket 4.

Some specific embodiments of the extrusion coating apparatus are described in detail below with reference to FIG. 1 to FIG. 11.

In some embodiments, the extrusion coating apparatus includes a first die head 1 and a second die head 2, and at least one gasket 4 disposed between the first die head 1 and the second die head 2. The at least one gasket 4 includes several common parallel-plate gaskets and wedge-shaped gaskets. The number and specification of common parallel-plate gaskets and the number and specification of wedge-shaped gaskets may be determined based on the requirements of field production. The slurry enters from the feeding inlet 31 of the flow channel 3, then flows uniformly through a cavity flow channel adjusted in the die head, and finally extrudes and flows out from the discharging outlet 32.

Referring to FIG. 7 and FIG. 9, the second die head 2 is configured to include a first module 21 and a second module 22. The first module 21 is a basic module. The second module 22 is located at the discharging outlet 32, is a lip module, and may adjust a height of a discharging lip. Meanwhile, the common parallel-plate gasket or the wedge-shaped gasket is configured to include a first gasket 41 and a second gasket 42. The first gasket 41 corresponds to the basic module and is a basic gasket. The second gasket 42 is located at the discharging outlet 32 and is a lip gasket. Similarly, the basic gasket and the lip gasket may be common parallel-plate gaskets or wedge-shaped gaskets. The discharging outlet 32 of the flow channel 3 is a flow channel section with an adjustable lip height, and a portion of the flow channel 3 except the discharging outlet 32 is a basic flow channel section. Therefore, it is possible to realize independent adjustment of a basic flow channel and a lip flow channel.

When the flow channel is adjusted by using the wedge-shaped gasket, a wedge-shaped gasket is also used between fastening bolts between the first die head 1 and the second die head 2, to ensure that bolt connection fastening surfaces are parallel.

With reference to FIG. 8, the lip module (the second module 22) is connected to the base module (the first module 21) through bolts 5, and a bolt hole on the lip module needs to be made into a long strip hole, to ensure an upward and downward adjustment amplitude of the lip module. The wedge-shaped gasket is used for the basic gasket or the lip gasket. Therefore, when the lip module is connected to the basic module through bolts, the wedge-shaped gasket is also used between the lip module and the basic module, thereby ensuring that bolt connection fastening surfaces are parallel.

The slurry providing component is used for providing slurry. The connection manner of the slurry providing component and the extrusion coating apparatus needs to be designed as a flexible connection, and a flexible range needs to cover an adjustment range of the die head. For example, a flange connection is adopted, so that a bolt connection hole on a flange needs to be used as an elongated hole having a range that needs to satisfy a change of position when a maximum adjustment is performed on the die head.

FIG. 2 is a schematic cross-sectional view of an extrusion coating apparatus according to a first embodiment of the present disclosure.

FIG. 6 is a schematic cross-sectional view of an extrusion coating apparatus according to a second embodiment of the present disclosure.

FIG. 7 is a schematic cross-sectional view of an extrusion coating apparatus according to a third embodiment of the present disclosure.

Referring to FIG. 2 and FIG. 6, a difference between the first embodiment and the second embodiment lies in that the gasket 4 in the first embodiment is a common parallel-plate gasket with an equal thickness. The gasket 4 in the second embodiment is a wedge-shaped gasket with a gradually varying thickness.

Referring to FIG. 2 and FIG. 7, a difference between the first embodiment and the third embodiment is that the second die head 2 in the first embodiment is a die head formed by a whole module, while the second die head 2 in the third embodiment is a die head formed by connecting the first module 21 with the second module 22.

In summary, the extrusion coating apparatus according to the embodiments of the present disclosure has a simple structure and is convenient to operate. An overall height change or inclination change of the flow channel may be realized only by adding and reducing the gasket. When factors like a flow property or yield of the slurry in process field change, there is no need to additionally design and produce a new die head, and only a gasket needs to be simply added and reduced to satisfy the requirement for consistency in an outlet speed. When a thickness of the outlet is provided with demands, the thickness of the outlet may be independently adjusted through an adjustable arrangement of a lip. Therefore, it is possible to avoid an influence on the thickness of the outlet during flow channel adjustment and achieve that the extrusion thickness is unchanged when the gasket is adjusted.

In some embodiments, a battery production system is further provided. The battery production system includes the extrusion coating apparatus according to the above embodiments.

In some embodiments, the battery production system further comprises an electrode plate providing apparatus. The electrode plate providing apparatus is configured to provide an electrode plate, and the extrusion coating apparatus is configured to extrude a coating slurry onto the electrode plate to form a coating layer.

The battery production system according to the embodiments of the present disclosure includes the extrusion coating apparatus according to the embodiments of the present disclosure. Therefore, the battery production system provided in the embodiments of the present disclosure correspondingly has the beneficial effects of the extrusion coating apparatus provided in the embodiments of the present disclosure.

While the present disclosure has been described with reference to preferred embodiments, various modifications may be made and equivalents may be substituted for components thereof without departing from the scope of the present disclosure. In particular, as long as there is no structural conflict, the technical features mentioned in the various embodiments can be combined in any manner. The present disclosure is not limited to the particular embodiments disclosed herein, and includes all embodiments falling within the scope of the claims.

## Claims

1. An extrusion coating apparatus, comprising:
a first die head (1) and a second die head (2) connected to each other in a snap-fit manner;
a flow channel (3) formed between the first die head (1) and the second die head (2), the flow channel (3) comprising a feeding inlet (31) and a discharging outlet (32); and
at least one gasket (4) disposed between the first die head (1) and the second die head (2), the at least one gasket (4) being disposed at two sides of the flow channel (3) in a direction from the feeding inlet (31) to the discharging outlet (32).

2. The extrusion coating apparatus according to claim 1, wherein the at least one gasket (4) comprises at least two layers of gaskets (4) laminated in a direction from the first die head (1) to the second die head (2).

3. The extrusion coating apparatus according to claim 1 or 2, wherein
the at least one gasket (4) has a thickness that is equal or gradually varying in the direction from the feeding inlet (31) to the discharging outlet (32).

4. The extrusion coating apparatus according to claim 3, wherein
a thickness of a portion of the at least one gasket (4) close to the feeding inlet (31) is greater than a thickness of a portion of the at least one gasket (4) close to the discharging outlet (32); or
the thickness of the portion of the at least one gasket (4) close to the feeding inlet (31) is smaller than the thickness of the portion of the at least one gasket (4) close to the discharging outlet (32).

5. The extrusion coating apparatus according to claim 4, wherein a thickness of the at least one gasket (4) gradually decreases or gradually increases in the direction from the feeding inlet (31) to the discharging outlet (32).

6. The extrusion coating apparatus according to any one of claims 1 to 5, wherein a width of the feeding inlet (31) is smaller than a width of the discharging outlet (32).

7. The extrusion coating apparatus according to any one of claims 1 to 6, wherein the flow channel (3) comprises an intermediate flow channel (33) located between the feeding inlet (31) and the discharging outlet (32), a width of the intermediate flow channel (33) gradually increasing in the direction from the feeding inlet (31) to the discharging outlet (32).

8. The extrusion coating apparatus according to claim 7, wherein the intermediate flow channel (33) has flow channel walls (333) located at two sides of the intermediate flow channel (33) in a width direction of the flow channel (3), wherein
the flow channel wall (333) is linear or arc-shaped; or the flow channel wall (333) comprises a linear section and an arc-shaped section.

9. The extrusion coating apparatus according to any one of claims 1 to 8, wherein the flow channel (3) comprises an intermediate flow channel (33) located between the feeding inlet (31) and the discharging outlet (32), the intermediate flow channel (33) comprising a first flow channel section (331) and a second flow channel section (332), the first flow channel section (331) being connected to the feeding inlet (31), the second flow channel section (332) being connected to the first flow channel section (331) and the discharging outlet (32), and in the direction from the feeding inlet (31) to the discharging outlet (32), a width of the first flow channel section (331) gradually increasing and a width of the second flow channel section (332) being equal to a width of the discharging outlet (32).

10. The extrusion coating apparatus according to any one of claims 1 to 9, wherein in a discharge direction of the flow channel (3), the discharging outlet (32) has a same width.

11. The extrusion coating apparatus according to any one of claims 1 to 10, wherein a height of the feeding inlet (31) is greater than a height of the discharging outlet (32).

12. The extrusion coating apparatus according to claim 11, wherein the flow channel (3) comprises an intermediate flow channel (33) located between the feeding inlet (31) and the discharging outlet (32), a height of the intermediate flow channel (33) being greater than the height of the discharging outlet (32) and being smaller than the height of the feeding inlet (31).

13. The extrusion coating apparatus according to claim 12, wherein the height of the intermediate flow channel (33) gradually decreases in the direction from the feeding inlet (31) to the discharging outlet (32).

14. The extrusion coating apparatus according to claim 12, wherein the intermediate flow channel (33) comprises a first flow channel section (331) and a second flow channel section (332), the first flow channel section (331) being connected to the feeding inlet (31), the second flow channel section (332) being connected to the first flow channel section (331) and the discharging outlet (32), and in the direction from the feeding inlet (31) to the discharging outlet (32), the first flow channel section (331) having a same height and a height of the second flow channel section (332) gradually decreasing.

15. The extrusion coating apparatus according to any one of claims 1 to 14, wherein the flow channel (3) further comprises an intermediate flow channel (33) located between the feeding inlet (31) and the discharging outlet (32), the second die head (1) comprising a first module (21) and a second module (22), the feeding inlet (31) and the intermediate flow channel (33) being formed in the first module (21), the discharging outlet (32) being formed in the second module (22), the at least one gasket (4) comprising a first gasket (41) located between the first module (21) and the first die head (1) and located at a side portion of the feeding inlet (31) and the intermediate flow channel (33).

16. The extrusion coating apparatus according to claim 15, wherein the at least one gasket (4) further comprises a second gasket (42) located between the second module (22) and the first die head (1) and located on a side portion of the discharging outlet (32).

17. The extrusion coating apparatus according to any one of claims 1 to 16, wherein the feeding inlet (31) is disposed at a first end of the first die head (1) and a first end of the second die head (2), the discharging outlet (32) being disposed at a second end of the first die head (1) opposite to the first end of the first die head (1) and a second end of the second die head (2) opposite to the first end of the second die head (2).

18. The extrusion coating apparatus according to any one of claims 1 to 17, wherein an inner wall surface of the flow channel (3) is a polished surface.

19. The extrusion coating apparatus according to any one of claims 1 to 18, further comprising a connection mechanism fixedly connecting the first die head (1) and the second die head (2) with the at least one gasket (4).

20. A battery production system, comprising the extrusion coating apparatus according to any one of claims 1 to 19.
